# EUROPEAN PATENT APPLICATION

(11) **EP 4 806 792 A1**
(43) Date of publication of application: **16.09.2026**
(21) Application number: 26160225.4
(22) Date of filing: 23.02.2026
(51) Int. Cl.: B64G 1/62

(54) **RADIATION SHIELD IMPLEMENTING DESIGN FOR DEMISE**

(30) Priority: 13.03.2025 US 202563771287 P; 26.08.2025 US 202519310205
(71) Applicant: Honeywell International Inc., Charlotte, NC 28202 (US)
(72) Inventor: SHICK, Jonathan E., Charlotte, 28202 (US)
(74) Representative: Haseltine Lake Kempner LLP

(57) **Abstract**

A radiation shield is configured to destruct upon atmospheric reentry. The radiation shield includes first portions of a radiation shielding material (107-1) overlapping some or all of first surfaces of a substrate (102) of the radiation shield. The radiation shield includes second portions (107-2) of the radiation shielding material overlapping some or all of second surfaces of the substrate (102). As a result, radiation penetrating the radiation shield (through opposite surfaces of the radiation shield) is diminished due to coverage by such portions under such surfaces of the radiation shield. Further, because each of the first and the second portions are segmented, when the radiation shield, *e.g.,* a payload at least partially enclosed by the radiation shield, re-enters atmosphere, the substrate will melt and/or evaporate permitting destruction of the radiation shield, *e.g.,* and the payload protected thereby.

## Description

### CROSS-REFERENCE TO RELATED APPLICATIONS

The present application claims benefit of U.S. Patent Application Serial No. 63/771,287 filed March 13, 2025; the entire contents of the aforementioned patent application are incorporated herein by reference as if set forth in its entirety.

### BACKGROUND

Space debris is an area of concern for satellite operators and government entities.

### SUMMARY

In some aspects, the techniques described herein relate to a radiation shield configured to destruct upon atmospheric reentry, the radiation shield including: a substrate which has a first surface and a second surface opposite the first surface; a first plurality of recesses in the first surface, wherein adjacent recesses, of the first plurality of recesses, are separated by a portion of the first surface of the substrate; a second plurality of recesses in the second surface, wherein adjacent recesses, of the second plurality of recesses, are separated by a portion of the second surface of the substrate; radiation shielding material only in each of the first plurality of recesses and in each of the second plurality of recesses, wherein the radiation shielding material is configured to transmit a quantity of radiation through the radiation shielding material that is less than a quantity of radiation which would be transmitted through the substrate alone; wherein each portion of the second surface is only opposite the radiation shielding material in one or more of the first plurality of recesses; wherein each portion of the first surface is only opposite the radiation shielding material in one or more of the second plurality of recesses; and wherein a melting point of the radiation shielding material is larger than the melting point of the substrate, and wherein the substrate is configured to disintegrate upon the atmospheric reentry.

In some aspects, the techniques described herein relate to a method of fabricating a radiation shield configured to destruct upon atmospheric reentry, the method including: forming a first plurality of recesses in a first surface of a substrate configured to disintegrate upon the atmospheric reentry; forming a second plurality of recesses in a second surface of the substrate, wherein the second surface is opposite the first surface; depositing radiation shielding material on the first surface and the second surface and in the first plurality of recesses and the second plurality of recesses, wherein the radiation shielding material is configured to transmit a quantity of radiation through the radiation shielding material that is less than a quantity of radiation which would be transmitted through the substrate alone; and removing the radiation shielding material except in the first and the second pluralities of recesses; wherein each portion of the second surface is only opposite the radiation shielding material in one or more of the first plurality of recesses, wherein each portion of the first surface is only opposite the radiation shielding material in one or more of the second plurality of recesses, and wherein a melting point of the radiation shielding material is larger than a melting point of the substrate, and wherein the substrate is configured to disintegrate upon the atmospheric reentry.

In some aspects, the techniques described herein relate to a radiation hardened payload including: a payload susceptible to damage and/or diminished performance due to radiation exposure; and a radiation shield system enclosing such payload, wherein the radiation shield system includes at least one radiation shield, wherein each radiation shield includes: a substrate and which has a first surface and a second surface opposite the first surface; a first plurality of recesses in the first surface, wherein adjacent recesses, of the first plurality of recesses, are separated by a portion of the first surface of the substrate; a second plurality of recesses in the second surface, wherein adjacent recesses, of the second plurality of recesses, are separated by a portion of the second surface of the substrate; radiation shielding material only in each of the first plurality of recesses and in each of the second plurality of recesses, wherein the radiation shielding material is configured to transmit a quantity of radiation through the radiation shielding material that is less than a quantity of radiation which would be transmitted through the substrate alone; and wherein each portion of the second surface is only opposite the radiation shielding material in one or more of the first plurality of recesses, wherein each portion of the first surface is only opposite the radiation shielding material in one or more of the second plurality of recesses, and wherein a melting point of the radiation shielding material is larger than the melting point of the substrate, and wherein the substrate is configured to disintegrate upon atmospheric reentry.

### BRIEF DESCRIPTION OF DRAWINGS

Understanding that the drawings depict only exemplary embodiments and are not therefore to be considered limiting in scope, the exemplary embodiments will be described with additional specificity and detail through the use of the accompanying drawings, in which:
FIG. 1 illustrates a method of manufacturing a radiation shield configured to destruct upon atmospheric reentry;
FIG. 2 illustrates a view of one embodiment of a radiation shield;
FIG. 3 illustrates a view of another embodiment of a radiation shield;
FIG. 4 illustrates a cross-sectional diagram of one embodiment of a set of radiation shields; and
FIG. 5 is a diagram of a radiation hardened payload according to embodiments of the invention.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

In examples, space debris is an area of concern for satellite operators and government entities. In examples, there is an increased sensitivity to designing spacecraft structures in such a way that its components can completely "burn up" upon re-entry into an atmosphere (such as Earth or another celestial body's atmosphere), a philosophy known as "Design for Demise". In examples, this is especially true for commercial space applications that aim for lower cost missions, where planned re-entry into a designated area (such as an ocean) becomes a challenge. In examples, commercial satellite integrators are beginning to levy requirements related to "Design for Demise" so that the entirety (or at least a substantial majority) of the satellite or other spacecraft disintegrates while coming into the atmosphere to minimize space debris. In examples, the lower altitude that components enter the atmosphere, the less that burns up and the more that survives upon landing on Earth.

In examples, space electronics often require the implementation of dense materials, *e.g*., high-Z materials, such as tungsten, tungsten carbide, tantalum, molybdenum, stainless steel, etc., which increase radiation hardness. A high-Z material means a material with an atomic number greater than twenty five. In examples, the typical materials that are used for radiation shielding have high melting points, which runs counter to Design for Demise principles, which recommend avoiding the usage of the very materials needed for radiation shielding. For example, tungsten has a very high melting point (approximately 3,422°C), while other less radiation hardened materials have substantially lower melting points (such as 660.3°C for aluminum). Design for Demise requirements, for example, are used with commercial space programs and equipment (including without limitation magnetometers (such as a Dual String Magnetometer), Space Rate Sensors (SRS), and/or Reaction Wheel (RW) assemblies) which may also require the usage of tungsten or stainless steel to attain the proper levels of radiation hardness.

Embodiments of the invention include a radiation shield configured to destruct upon atmospheric reentry. The radiation shield includes first portions of a radiation shielding material overlapping some or all of first surfaces of a substrate of the radiation shield. The radiation shield includes second portions of the radiation shielding material overlapping some or all of second surfaces of the substrate. As a result, a rate of non-ionizing radiation penetrating the radiation shield (through opposite surfaces of the radiation shield) is diminished due to coverage by such portions under such surfaces of the radiation shield. Further, because each of the first and the second portions are segmented, when the radiation shield, *e.g.,* a payload at least partially enclosed by the radiation shield, re-enters atmosphere, the substrate will melt and/or evaporate permitting destruction of the radiation shield, *e.g*., and the payload protected thereby.

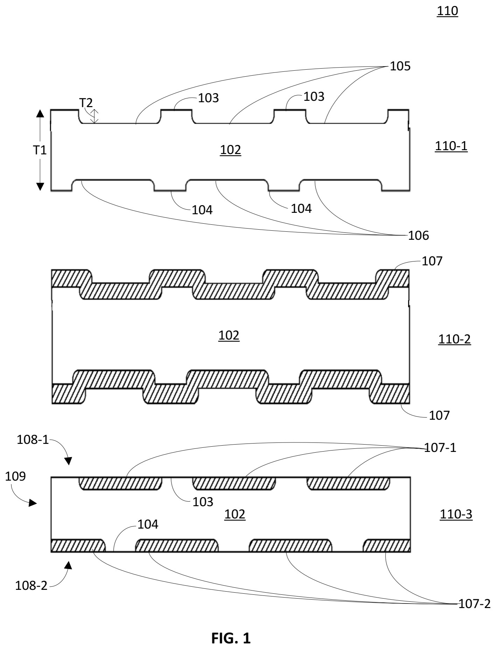

FIG. 1 illustrates a method 110 of manufacturing a radiation shield 109 configured to destruct upon atmospheric reentry. The method 110 may be implemented via the techniques described elsewhere herein including with respect to other Figures herein, but may also be implemented with other techniques as well. The blocks of the flow diagram have been arranged in a generally sequential manner for ease of explanation; however, it is to be understood that this arrangement is merely exemplary, and it should be recognized that the processing associated with the methods described herein (and the blocks shown in the Figures) may occur in a different order (for example, where at least some of the processing associated with the blocks is performed in parallel and/or in an event-driven manner).

In block 110-1, a first plurality of recesses 105 is formed in a first surface 103 of a substrate 102 configured disintegrate upon atmospheric reentry. A second plurality of recesses 106 is also formed in a second surface 104 of the substrate 102 configured disintegrate upon atmospheric reentry. Optionally, such disintegration occurs due to sublimation, ablation, melting, and/or evaporation. Optionally, such recesses are formed by mechanical milling (e.g., using a numerically controlled milling machine) and/or stamping. Optionally, the substrate 102 includes aluminum and/or a carbon fiber *(e.g.,* carbon fiber and epoxy composite material). Optionally, the substrate 102 has a thickness T1 between 100 and 250 mils. Optionally, each recess of the first and the second pluralities of recesses 105, 106 has a thickness T2 of between 10 and 100 mils. The dimensions of each recess of each of the first and the second pluralities of recesses 105, 106 may be the same or different. A separation, by the first surface 103, between each recess of the first plurality of recesses 105 may be the same or different. A separation, by the second surface 104, between each recess of the second plurality of recesses 106 may be the same or different.

In block 110-2, radiation shielding material 107 is deposited on the first surface and the second surface and in the first plurality of recesses 105 and in the second plurality of recesses 106. Optionally, the radiation shielding material 107 has a density above a density threshold level and the substrate has a density below the density threshold level; such a density threshold level may be, for example, in a range of five to seven grams per centimeter³. Alternatively, the radiation shielding material 107 has an atomic number above an atomic number threshold level and the substrate has an atomic number below the atomic number threshold level; such a threshold level may be, for example, an atomic number of about twenty five.

Optionally, the radiation shielding material 107 includes a high-Z material, *e.g*., tantalum, molybdenum, tungsten, tungsten carbide and/or stainless steel. Optionally, such depositing of radiation shielding material 107 is performed by plasma and/or flame spraying of the radiation shielding material 107. The radiation shielding material 107 is configured to transmit a quantity of radiation through the radiation shielding material 107 that is less than a quantity of radiation which would be transmitted through the substrate 102 alone. Radiation, as used herein, means non-ionizing and/or ionizing radiation, *e.g*., whether particle or electromagnetic radiation. The melting point of the radiation shielding material 107 is larger than the melting point of the substrate 102. Optionally, the radiation shielding material 107 has a larger atomic number and/or material density than the substrate 102. Optionally, the melting point of the radiation shielding material 107 is within or greater than a range from 900 to 1000 degrees Celsius.

In block 110-3, the radiation shielding material 107 is removed except in the first plurality of recesses 105 and the second pluralities of recesses 106. Thus, the radiation shielding material 107 is removed over the first and the second surfaces 103, 104. First portions 107-1 of the radiation shielding material 107 remain in each recess of the first plurality of recesses 105 (through the first surface 103). Second portions 107-2 of the radiation shielding material 107 remains in each recess of the second plurality of recesses 105 (through the second surface 104). Optionally, such removal of the radiation shielding material 107 includes performing milling, grinding, and/or lapping, *e.g*., with numerically controlled machine(s), each of the first surface 103 and the second surface 104.

The first portions 107-1 of the radiation shielding material 107 of the radiation shield 109 overlap some or all of first surfaces 103. The second portions 107-2 of the radiation shielding material 107 of the radiation shield 109 overlap some or all of the second surfaces 104. Optionally, each portion of the second surface 104 is only opposite radiation shielding material 107 in one or more of the first plurality of recesses 105, and each portion of the first surface 103 is only opposite radiation shielding material 107 in one or more of the second plurality of recesses 106.

As a result, a dose of radiation penetrating the radiation shield 109 (through opposite surfaces 108-1, 108-2 of the radiation shield 109) is diminished due to coverage by portions 107-1, 107-2 under such surfaces 108-1, 108-2 of the radiation shield 109. Further, because each of the first and the second portions 107-1, 107-2 are segmented, when the radiation shield 109, *e.g.,* a payload at least partially enclosed by the radiation shield 109, re-enters atmosphere, the substrate 102 will disintegrate permitting destruction of the radiation shield 109, *e.g.,* and the payload protected thereby.

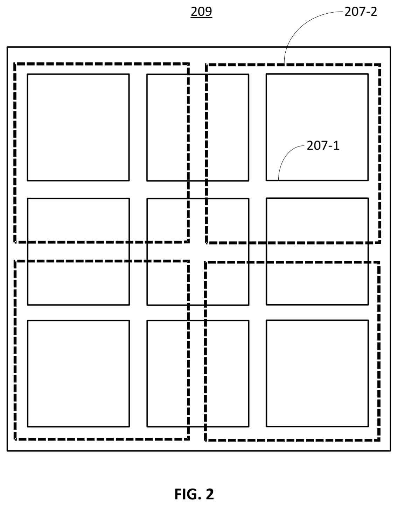

FIG. 2 illustrates a view of one embodiment of a radiation shield 209. The radiation shield 209 includes the first portions 207-1 of the radiation shielding material in each recess of the first plurality of recesses (through the first surface). The radiation shield 209 includes the second portions 207-2 of the radiation shielding material in each recess of the second plurality of recesses (through the second surface). The first portions 207-1 of the radiation shielding material overlap some or all of the first surfaces. The second portions 207-2 of the radiation shielding material overlap some or all of the second surfaces. Because each of the first and the second portions 207-1, 207-2 are segmented, when the radiation shield 209, *e.g.,* a payload at least partially enclosed by the radiation shield 209, re-enters atmosphere, the substrate will disintegrate permitting destruction of the radiation shield 209, *e.g.,* and the payload protected thereby.

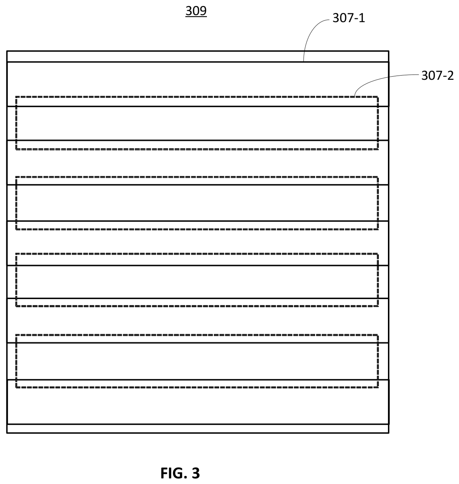

FIG. 3 illustrates a view of another embodiment of a radiation shield 309. The radiation shield 309 includes the first portions 307-1 of the radiation shielding material in each recess of the first plurality of recesses (through the first surface). The radiation shield 309 includes the second portions 307-2 of the radiation shielding material in each recess of the second plurality of recesses (through the second surface). The first portions 307-1 of the radiation shielding material overlap some or all of the first surfaces. The second portions 307-2 of the radiation shielding material overlap some or all of the second surfaces. Because each of the first and the second portions 307-1, 307-2 are segmented, when the radiation shield 309, *e.g.,* a payload at least partially enclosed by the radiation shield 309, re-enters atmosphere, the substrate will disintegrate permitting destruction of the radiation shield 209, *e.g.,* and the payload protected thereby.

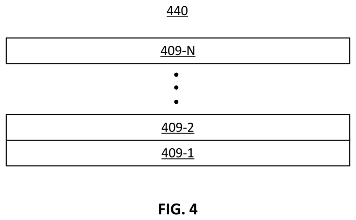

Two or more radiation shields may be placed over each other to increase suppression of radiation penetrating the radiation shields. FIG. 4 illustrates a cross-sectional diagram of one embodiment of a set of radiation shields 440. The set of radiation shields 440 includes one or more radiation shields. Each of N radiation shields 409-1, 409-2, 409-N layered one over another. N is an integer greater than zero. Optionally, there may be other material(s) disposed between two adjacent radiation shields.

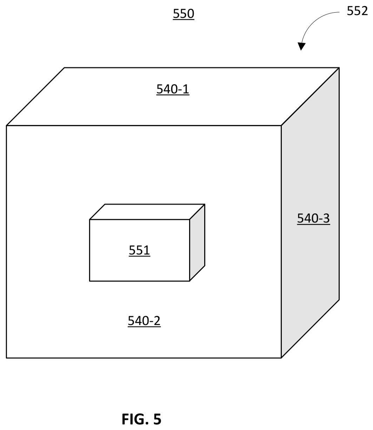

FIG. 5 is a diagram of a radiation hardened payload 550 according to embodiments of the invention. The radiation hardened payload 550 includes a radiation shield system 552 enclosing, partially or wholly, a payload 551. The payload 551 is any device susceptible to damage and/or diminished performance due to radiation exposure, *e.g*., including electronic circuitry. Optionally, such device, *e.g*., electronic circuitry, may even be designed to be at least partially resistant to non-ionizing radiation. The payload 551 may be, for example, magnetometer(s) (*e.g*., a Dual String Magnetometer), Space Rate Sensor(s) (SRS), and/or Reaction Wheel (RW) assembl(ies), and/or any other type of payload susceptible to damage and/or diminished performance due to radiation exposure.

The radiation shield system 552 may have any shape, *e.g.,* a polyhedron or a non-polyhedron. The radiation shield system 552 includes at least one set of radiation shield(s) 540-1, 540-2, 540-3. For pedagogical purposes, the radiation shield system 552 is illustrated as a cube which has six sides each of which is formed by a unique set of radiation shield(s) 540-1, 540-2, 540-3. Only three sides are visible in FIG. 5. Each radiation shield of a set of radiation shields may optionally be implemented with the radiation shield illustrated elsewhere herein.

While detailed descriptions of one or more embodiments of the disclosure have been given above, various alternatives, modifications, and equivalents will be apparent to those skilled in the art without varying from the spirit of the disclosure. For example, while the embodiments described above refer to particular features, the scope of this disclosure also includes embodiments having different combinations of features and embodiments that do not include all of the described features.

### Example Embodiments

Example 1 is a radiation shield configured to destruct upon atmospheric reentry, the radiation shield comprising: a substrate which has a first surface and a second surface opposite the first surface; a first plurality of recesses in the first surface, wherein adjacent recesses, of the first plurality of recesses, are separated by a portion of the first surface of the substrate; a second plurality of recesses in the second surface, wherein adjacent recesses, of the second plurality of recesses, are separated by a portion of the second surface of the substrate; radiation shielding material only in each of the first plurality of recesses and in each of the second plurality of recesses, wherein the radiation shielding material is configured to transmit a quantity of radiation through the radiation shielding material that is less than a quantity of radiation which would be transmitted through the substrate alone; wherein each portion of the second surface is only opposite the radiation shielding material in one or more of the first plurality of recesses; wherein each portion of the first surface is only opposite the radiation shielding material in one or more of the second plurality of recesses; and wherein a melting point of the radiation shielding material is larger than the melting point of the substrate, and wherein the substrate is configured to disintegrate upon the atmospheric reentry.

Example 2 is the radiation shield of Example 1, wherein the radiation shielding material has a density above a density threshold level, and wherein the substrate has a density below the density threshold level.

Example 3 is the radiation shield of Examples 1-2, wherein the radiation shielding material has an atomic number above an atomic number threshold level, and wherein the substrate has an atomic number below the atomic number threshold level.

Example 4 is the radiation shield of Example 1-3, wherein the substrate comprises aluminum or carbon fiber.

Example 5 is the radiation shield of Example 1-4, wherein the radiation shielding material includes a high-Z material.

Example 6 is the radiation shield of Examples 1-6, wherein the melting point of the radiation shielding material is greater than 900 degrees Celsius.

Example 7 is a method of fabricating a radiation shield configured to destruct upon atmospheric reentry, the method comprising: forming a first plurality of recesses in a first surface of a substrate configured to disintegrate upon the atmospheric reentry; forming a second plurality of recesses in a second surface of the substrate, wherein the second surface is opposite the first surface; depositing radiation shielding material on the first surface and the second surface and in the first plurality of recesses and the second plurality of recesses, wherein the radiation shielding material is configured to transmit a quantity of radiation through the radiation shielding material that is less than a quantity of radiation which would be transmitted through the substrate alone; and removing the radiation shielding material except in the first and the second pluralities of recesses; wherein each portion of the second surface is only opposite the radiation shielding material in one or more of the first plurality of recesses, wherein each portion of the first surface is only opposite the radiation shielding material in one or more of the second plurality of recesses, and wherein a melting point of the radiation shielding material is larger than a melting point of the substrate, and wherein the substrate is configured to disintegrate upon the atmospheric reentry.

Example 8 is the method of Example 7, wherein the first and the second pluralities of recesses are formed by mechanical milling and/or mechanical stamping.

Example 9 is the method of Examples 7-8, wherein the radiation shielding material is deposited by plasma spray and/or flame spray.

Example 10 is the method of Examples 7-9, wherein the radiation shielding material is removed by mechanical lapping, milling and/or mechanical grinding.

Example 11 is the method of Example 7-10, wherein the substrate comprises aluminum or carbon fiber.

Example 12 is the method of Examples 7-11, wherein the radiation shielding material includes a high-Z material.

Example 13 is the method of Examples 7-12, wherein the melting point of the radiation shielding material is greater than 900 degrees Celsius.

Example 14 is a radiation hardened payload comprising: a payload susceptible to damage and/or diminished performance due to radiation exposure; and a radiation shield system enclosing such payload, wherein the radiation shield system includes at least one radiation shield, wherein each radiation shield includes: a substrate and which has a first surface and a second surface opposite the first surface; a first plurality of recesses in the first surface, wherein adjacent recesses, of the first plurality of recesses, are separated by a portion of the first surface of the substrate; a second plurality of recesses in the second surface, wherein adjacent recesses, of the second plurality of recesses, are separated by a portion of the second surface of the substrate; radiation shielding material only in each of the first plurality of recesses and in each of the second plurality of recesses, wherein the radiation shielding material is configured to transmit a quantity of radiation through the radiation shielding material that is less than a quantity of radiation which would be transmitted through the substrate alone; and wherein each portion of the second surface is only opposite the radiation shielding material in one or more of the first plurality of recesses, wherein each portion of the first surface is only opposite the radiation shielding material in one or more of the second plurality of recesses, and wherein a melting point of the radiation shielding material is larger than the melting point of the substrate, and wherein the substrate is configured to disintegrate upon atmospheric reentry.

Example 15 is the radiation hardened payload of Example 14, wherein the payload includes at least one of a magnetometer, a Space Rate Sensor, and a Reaction Wheel.

Example 16 is the radiation hardened payload of Examples 14-15, wherein the radiation shielding material has a density above a density threshold level, and wherein the substrate has a density below the density threshold level.

Example 17 is the radiation hardened payload of Examples 14-16, wherein the radiation shielding material has an atomic number above an atomic number threshold level, and wherein the substrate has an atomic number below the atomic number threshold level.

Example 18 is the radiation hardened payload of Example 14-17, wherein the substrate comprises aluminum or carbon fiber.

Example 19 is the radiation hardened payload of Examples 14-18, wherein the radiation shielding material includes a high-Z material.

Example 20 is the radiation hardened payload of Examples 14-19, wherein the melting point of the radiation shielding material is greater than 900 degrees Celsius.

Accordingly, the scope of the present disclosure is intended to embrace all such alternatives, modifications, and variations as fall within the scope of the claims, together with all equivalents thereof. Therefore, the above description should not be taken as limiting.

## Claims

1. A radiation shield configured to destruct upon atmospheric reentry, the radiation shield comprising:
a substrate which has a first surface and a second surface opposite the first surface;
a first plurality of recesses in the first surface, wherein adjacent recesses, of the first plurality of recesses, are separated by a portion of the first surface of the substrate;
a second plurality of recesses in the second surface, wherein adjacent recesses, of the second plurality of recesses, are separated by a portion of the second surface of the substrate;
radiation shielding material only in each of the first plurality of recesses and in each of the second plurality of recesses, wherein the radiation shielding material is configured to transmit a quantity of radiation through the radiation shielding material that is less than a quantity of radiation which would be transmitted through the substrate alone;
wherein each portion of the second surface is only opposite the radiation shielding material in one or more of the first plurality of recesses;
wherein each portion of the first surface is only opposite the radiation shielding material in one or more of the second plurality of recesses; and
wherein a melting point of the radiation shielding material is larger than the melting point of the substrate, and wherein the substrate is configured to disintegrate upon the atmospheric reentry;
optionally, wherein the melting point of the radiation shielding material is greater than 900 degrees Celsius.

2. The radiation shield of claim 1, wherein the radiation shielding material has a density above a density threshold level, and wherein the substrate has a density below the density threshold level.

3. The radiation shield of claim 1-2, wherein the radiation shielding material has an atomic number above an atomic number threshold level, and wherein the substrate has an atomic number below the atomic number threshold level.

4. The radiation shield of claim 1-3, wherein the substrate comprises aluminum or carbon fiber.

5. The radiation shield of claim 1-4, wherein the radiation shielding material includes a high-Z material.

6. A method of fabricating a radiation shield configured to destruct upon atmospheric reentry, the method comprising:
forming a first plurality of recesses in a first surface of a substrate configured to disintegrate upon the atmospheric reentry;
forming a second plurality of recesses in a second surface of the substrate, wherein the second surface is opposite the first surface;
depositing radiation shielding material on the first surface and the second surface and in the first plurality of recesses and the second plurality of recesses, wherein the radiation shielding material is configured to transmit a quantity of radiation through the radiation shielding material that is less than a quantity of radiation which would be transmitted through the substrate alone; and
removing the radiation shielding material except in the first and the second pluralities of recesses;
wherein each portion of the second surface is only opposite the radiation shielding material in one or more of the first plurality of recesses, wherein each portion of the first surface is only opposite the radiation shielding material in one or more of the second plurality of recesses, and wherein a melting point of the radiation shielding material is larger than a melting point of the substrate, and wherein the substrate is configured to disintegrate upon the atmospheric reentry;
optionally, wherein the melting point of the radiation shielding material is greater than 900 degrees Celsius.

7. The method of claim 6, wherein the first and the second pluralities of recesses are formed by mechanical milling and/or mechanical stamping.

8. The method of claim 6-7, wherein the radiation shielding material is deposited by plasma spray and/or flame spray.

9. The method of claim 6-8, wherein the radiation shielding material is removed by mechanical lapping, milling and/or mechanical grinding.

10. The method of claim 6-9, wherein the radiation shielding material includes a high-Z material.
